# EUROPEAN PATENT APPLICATION

(11) **EP 3 722 702 A1**
(43) Date of publication of application: **14.10.2020**
(21) Application number: 18884997.0
(22) Date of filing: 19.11.2018
(51) Int. Cl.: F25B 1/053, F25B 1/00, F25B 1/10, F25B 39/00, F25B 39/04

(54) **REFRIGERATION CYCLE SYSTEM AND METHOD FOR DRIVING REFRIGERATION CYCLE SYSTEM**

(30) Priority: 04.12.2017 JP 2017232231; 01.11.2018 JP 2018206481
(71) Applicant: Panasonic Intellectual Property Management Co., Ltd., Osaka-shi, Osaka 540-6207 (JP)
(72) Inventor: KAWANO Bunki, Osaka 540-6207 (JP); TAMURA, Tomoichiro, Osaka 540-6207 (JP); MARUHASHI, Iori, Osaka 540-6207 (JP)
(74) Representative: Eisenführ Speiser
(86) International application number: PCT/JP2018/042651
(87) International publication number: WO 2019/111690

(57) **Abstract**

A refrigeration cycle system includes an evaporator, a first compressor, a second compressor, a condenser, a gas-liquid separation tank, a first circulation path, and a second circulation path. The first compressor and the second compressor are activated after a liquid phase refrigerant stored in the gas-liquid separation tank is released to an outside of the gas-liquid separation tank. A release path may be provided which leads the liquid phase refrigerant stored in the gas-liquid separation tank to the outside of the gas-liquid separation tank.

## Description

### Technical Field

The present disclosure relates to a refrigeration cycle system and a method for driving a refrigeration cycle system.

### Background Art

In related art, a refrigeration cycle system has been known which is configured to expand a refrigerant in two stages (for example, see PTL 1).

Fig. 6 illustrates a refrigeration cycle system 100 in related art disclosed in PTL 1. As illustrated in Fig. 6, a CO₂ refrigeration cycle system 100 is configured with a compressor 103 that compresses a CO₂ refrigerant to a supercritical region, a cooler 104 that cools the compressed CO₂ refrigerant, decompression systems 106 and 107 that decompress the cooled CO₂ refrigerant to a two-phase state, and an evaporator 102 that evaporates the decompressed CO₂ refrigerant. The decompression systems 106 and 107 of the CO₂ refrigeration cycle system 100 include a first stage decompression system 106 and a second stage decompression system 107.

A gas-liquid separator 105 is provided between the first stage decompression system 106 and the second stage decompression system 107. The compressor 103 is a screw compressor 103. A drawing circuit 108 is provided between a gas phase unit 105a of the gas-liquid separator 105 and a closed space of the screw compressor 103. The second stage decompression system 107 is connected with a liquid phase unit 105b of the gas-liquid separator 105.

In an operation method disclosed in PTL 1, the CO₂ refrigerant in the two-phase state, which is decompressed by the first stage decompression system 106, is separated to a gas phase refrigerant and a liquid phase refrigerant by the gas-liquid separator 105. Then, the separated gas phase refrigerant is introduced into the closed space of the screw compressor 103, the separated liquid phase refrigerant is introduced into the second stage decompression system 107, and a stable operation is performed.

### Citation List

### Patent Literature

PTL 1: Japanese Unexamined Patent Application Publication No. 2006-292229

### Summary of Invention

### Technical Problem

In a configuration in related art, because a compressor 103 is a screw compressor, it is possible to increase the rotational speed of the compressor 103 to a prescribed rotational speed regardless of a pressure ratio between an inlet port and a discharge port of the compressor. That is, it is possible to activate a refrigeration cycle system.

However, in a case where plural turbo compressors are used as compression means, a low-pressure stage pressure ratio in a process of raising the rotational speeds of the plural turbo compressors may largely exceed the low-pressure stage pressure ratio in a usual operation. As a result, surging occurs in the compressor of the low-pressure stage, and the refrigeration cycle system may not be capable of being activated. The present disclosure provides techniques for activating a refrigeration cycle system while occurrence of surging is prevented. Solution to Problem

The present disclosure provides a method for driving a refrigeration cycle system, in which
the refrigeration cycle system includes:
an evaporator that evaporates a liquid phase refrigerant and produces a gas phase refrigerant;
a first compressor that compresses and discharges the gas phase refrigerant of the evaporator;
a second compressor that compresses and discharges the gas phase refrigerant discharged from the first compressor;
a condenser that condenses the gas phase refrigerant discharged from the second compressor and produces a liquid phase refrigerant; and
a gas-liquid separation tank that stores the liquid phase refrigerant produced by the condenser, produces a gas phase refrigerant by evaporating the liquid phase refrigerant, and supplies the gas phase refrigerant to the second compressor,
each of the first compressor and the second compressor is a dynamic compressor, and
the method includes:
activating the first compressor and the second compressor after the liquid phase refrigerant stored in the gas-liquid separation tank is released to an outside of the gas-liquid separation tank.

### Advantageous Effects of Invention

Techniques of the present disclosure may activate a refrigeration cycle system while occurrence of surging is prevented.

### Brief Description of Drawings

[Fig. 1A] Fig. 1A is a configuration diagram of a refrigeration cycle system according to a first embodiment of the present disclosure.
[Fig. 1B] Fig. 1B is a configuration diagram of a refrigeration cycle system according to a first modification example.
[Fig. 2] Fig. 2 is a flowchart of a process executed for activating the refrigeration cycle system according to the first embodiment of the present disclosure.
[Fig. 3A] Fig. 3A is a configuration diagram of a refrigeration cycle system according to a second embodiment of the present disclosure.
[Fig. 3B] Fig. 3B is a configuration diagram of a refrigeration cycle system according to a second modification example.
[Fig. 3C] Fig. 3C is a configuration diagram of a refrigeration cycle system according to a third modification example.
[Fig. 4] Fig. 4 is a configuration diagram of a refrigeration cycle system according to a third embodiment of the present disclosure.
[Fig. 5A] Fig. 5A is a configuration diagram of a refrigeration cycle system according to a fourth embodiment of the present disclosure.
[Fig. 5B] Fig. 5B is a diagram that illustrates a state where the refrigeration cycle system according to the fourth embodiment is stopped.
[Fig. 5C] Fig. 5C is a configuration diagram of a refrigeration cycle system according to a fourth modification example.
[Fig. 5D] Fig. 5D is a configuration diagram of a refrigeration cycle system according to a fifth modification example.
[Fig. 5E] Fig. 5E is a configuration diagram of a refrigeration cycle system according to a sixth modification example.

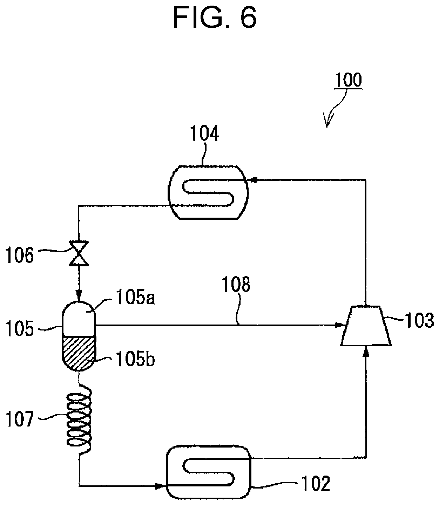

[Fig. 6] Fig. 6 is a configuration diagram of a refrigeration cycle system in related art.

### Description of Embodiments

### (Underlying Knowledge Forming Basis of Present Disclosure)

In a case where a refrigeration cycle system is activated from a state at a high temperature (for example, 30°C), the temperature of a liquid phase refrigerant stored in an evaporator gradually lowers due to evaporation of the liquid phase refrigerant itself. The internal pressure of the evaporator gradually lowers in response to the lowering of the temperature of the liquid phase refrigerant. On the other hand, the liquid phase refrigerant stored in a gas-liquid separator is maintained at a high temperature, and a state where an intermediate pressure is high thereby continues. This is because the intermediate pressure is determined by the temperature of the liquid phase refrigerant stored in the gas-liquid separator. In a case where a compressor is a displacement compressor, it is possible to activate the refrigeration cycle system regardless of the intermediate pressure.

However, in a case where a refrigerant is compressed by plural turbo compressors, a low-pressure stage pressure ratio in a process of raising the rotational speeds of the turbo compressors may largely exceed the low-pressure stage pressure ratio in a usual operation. As a result, surging occurs in the compressor of the low-pressure stage, and the refrigeration cycle system may not be capable of being activated. In order to prevent surging, it is effective to inhibit elevation of the low-pressure stage pressure ratio.

"Low-pressure stage pressure ratio" means the ratio of the intermediate pressure to the internal pressure of the evaporator. The intermediate pressure is an internal pressure of the gas-liquid separator.

### (Overview of Aspects According to the Present Disclosure)

A method for driving a refrigeration cycle system according to a first aspect of the present disclosure is
a method for driving a refrigeration cycle system, in which
the refrigeration cycle system includes:
an evaporator that evaporates a liquid phase refrigerant and produces a gas phase refrigerant;
a first compressor that compresses and discharges the gas phase refrigerant of the evaporator;
a second compressor that compresses and discharges the gas phase refrigerant discharged from the first compressor;
a condenser that condenses the gas phase refrigerant discharged from the second compressor and produces a liquid phase refrigerant; and
a gas-liquid separation tank that stores the liquid phase refrigerant produced by the condenser, produces a gas phase refrigerant by evaporating the liquid phase refrigerant, and supplies the gas phase refrigerant to the second compressor,
each of the first compressor and the second compressor is a dynamic compressor, and
the method includes:
activating the first compressor and the second compressor after the liquid phase refrigerant stored in the gas-liquid separation tank is released to an outside of the gas-liquid separation tank.

In the first aspect, a low-pressure stage pressure ratio (intermediate pressure/pressure in the evaporator) is prevented from largely exceeding the low-pressure stage pressure ratio in the usual operation, and it thereby becomes possible to activate the refrigeration cycle system even from a state at a high temperature without occurrence of surging.

In a second aspect of the present disclosure, for example, in the method for driving a refrigeration cycle system according to the first aspect, the refrigeration cycle system may further include a release path that leads the liquid phase refrigerant stored in the gas-liquid separation tank to the outside of the gas-liquid separation tank and may release the liquid phase refrigerant to the outside of the gas-liquid separation tank via the release path. When the liquid phase refrigerant may be released to the outside of the gas-liquid separation tank, surging may be prevented.

In a third aspect of the present disclosure, for example, in the method for driving a refrigeration cycle system according to the second aspect, the release path may connect the gas-liquid separation tank with the evaporator, and the liquid phase refrigerant stored in the gas-liquid separation tank may flow from the gas-liquid separation tank toward the evaporator. In a case where the portion to which the release path is connected is the condenser, a tank for reserving the liquid phase refrigerant of the gas-liquid separation tank does not have to be separately provided.

In a fourth aspect of the present disclosure, for example, in the method for driving a refrigeration cycle system according to the third aspect, supply of the liquid phase refrigerant from the gas-liquid separation tank to the evaporator may be stopped, and the first compressor and the second compressor may be activated. In such a manner, surging may certainly be prevented.

In a fifth aspect of the present disclosure, for example, in the method for driving a refrigeration cycle system according to the second aspect, the release path may connect the gas-liquid separation tank with the condenser, and the liquid phase refrigerant stored in the gas-liquid separation tank may flow from the gas-liquid separation tank toward the condenser. In a case where the portion to which the release path is connected is the condenser, a tank for reserving the liquid phase refrigerant of the gas-liquid separation tank does not have to be separately provided.

In a sixth aspect of the present disclosure, for example, in the method for driving a refrigeration cycle system according to the fifth aspect, supply of the liquid phase refrigerant from the gas-liquid separation tank to the condenser may be stopped, and the first compressor and the second compressor may be activated. In such a manner, surging may certainly be prevented.

In a seventh aspect of the present disclosure, for example, the method for driving a refrigeration cycle system according to any one of the first to sixth aspects may further include raising a liquid surface of the liquid phase refrigerant in the gas-liquid separation tank after the first compressor and the second compressor are activated. Accordingly, it becomes possible to create a two-phase state at a prescribed intermediate pressure without controlling the temperature.

In an eighth aspect of the present disclosure, for example, in the method for driving a refrigeration cycle system according to any one of the first to seventh aspects, given that a height from an installation surface of the refrigeration cycle system to a bottom of the gas-liquid separation tank is set as h1 and a height from the installation surface to the liquid surface of the liquid phase refrigerant in the evaporator in a case where the refrigeration cycle system is stopped is set as h2, h1 ≥ h2 may be satisfied. In such a configuration, it is possible to completely release the liquid phase refrigerant from the gas-liquid separation tank without using help of a pump. It is also possible to omit a dedicated release path.

A refrigeration cycle system according to a ninth aspect of the present disclosure includes:
an evaporator that evaporates a liquid phase refrigerant and produces a gas phase refrigerant;
a first compressor that is a dynamic compressor and compresses and discharges the gas phase refrigerant of the evaporator;
a second compressor that is a dynamic compressor and compresses and discharges the gas phase refrigerant discharged from the first compressor;
a condenser that condenses the gas phase refrigerant discharged from the second compressor and produces a liquid phase refrigerant;
a gas-liquid separation tank that produces a gas phase refrigerant by evaporating the liquid phase refrigerant produced by the condenser and supplies the gas phase refrigerant to the second compressor;
a first circulation path that leads the liquid phase refrigerant in the condenser to the gas-liquid separation tank;
a second circulation path that leads the liquid phase refrigerant in the gas-liquid separation tank to the evaporator; and
a release path that is a separate route from the first circulation path and the second circulation path and leads the liquid phase refrigerant from the gas-liquid separation tank to the evaporator or from the gas-liquid separation tank to the condenser.

The ninth aspect may provide the same effect as the first aspect. In the ninth aspect, less restriction is imposed on the first circulation path and the second circulation path, and the first circulation path and the second circulation path may be configured in optimal design in consideration of the efficiency in the usual operation.

In a tenth aspect of the present disclosure, for example, the refrigeration cycle system according to the ninth aspect may further include a pump that is arranged in the release path. In such a configuration, the liquid phase refrigerant may certainly be released to the evaporator by work of the pump, regardless of the positional relationship between the evaporator and the gas-liquid separation tank. Similarly, the liquid phase refrigerant may certainly be released to the condenser by work of the pump, regardless of the positional relationship between the condenser and the gas-liquid separation tank.

In an eleventh aspect of the present disclosure, for example, the refrigeration cycle system according to the ninth or tenth aspect may further include a control circuit that controls drive of the first compressor and the second compressor. The control circuit may cause the liquid phase refrigerant to be released from an inside of the gas-liquid separation tank to the evaporator or the condenser via the release path and may activate the first compressor and the second compressor after the liquid phase refrigerant is released. In such a manner, surging may certainly be prevented.

In a twelfth aspect of the present disclosure, for example, in the refrigeration cycle system according to the tenth aspect, in a case where a liquid surface of the liquid phase refrigerant in the gas-liquid separation tank is at a prescribed level or lower, the pump may be stopped, and the first compressor and the second compressor may be activated. In such a manner, surging may certainly be prevented.

In a thirteenth aspect of the present disclosure, for example, in the refrigeration cycle system according to any one of the ninth to twelfth aspects, the liquid surface of the liquid phase refrigerant in the gas-liquid separation tank may be raised after the first compressor and the second compressor are activated. Accordingly, it becomes possible to create a two-phase state at a prescribed intermediate pressure without controlling the temperature.

In a fourteenth aspect of the present disclosure, for example, the refrigeration cycle system according to the ninth aspect may further include: a heat absorption heat exchanger; and a pump that is arranged on a route which connects the gas-liquid separation tank with the heat absorption heat exchanger. Such a configuration enables reduction in the number of requested pumps.

In a fifteenth aspect of the present disclosure, for example, the refrigeration cycle system according to the ninth aspect may further include: a heat dissipation heat exchanger; and a pump that is arranged on a route which connects the gas-liquid separation tank with the heat dissipation heat exchanger. Such a configuration enables reduction in the number of requested pumps.

A refrigeration cycle system according to a sixteenth aspect of the present disclosure includes:
an evaporator that evaporates a liquid phase refrigerant and produces a gas phase refrigerant;
a first compressor that compresses and discharges the gas phase refrigerant produced by the evaporator;
a second compressor that compresses and discharges the gas phase refrigerant discharged from the first compressor;
a condenser that condenses the gas phase refrigerant discharged from the second compressor and produces a liquid phase refrigerant;
a gas-liquid separation tank that stores the liquid phase refrigerant produced by the condenser, produces a gas phase refrigerant by evaporating the liquid phase refrigerant, and supplies the gas phase refrigerant to the second compressor;
a release path that is connected with the gas-liquid separation tank and leads the liquid phase refrigerant stored in the gas-liquid separation tank to an outside of the gas-liquid separation tank; and
a control circuit that controls drive of the first compressor and the second compressor, in which
each of the first compressor and the second compressor is a dynamic compressor, and
the control circuit activates the first compressor and the second compressor after the liquid phase refrigerant stored in the gas-liquid separation tank is released to the outside of the gas-liquid separation tank via the refrigerant release route.

The sixteenth aspect may provide the same effect as the first aspect.

In a seventeenth aspect of the present disclosure, for example, in the refrigeration cycle system according to the sixteenth aspect, the control circuit may raise a liquid surface of the liquid phase refrigerant in the gas-liquid separation tank after activating the first compressor and the second compressor. Accordingly, it becomes possible to create a two-phase state at a prescribed intermediate pressure without controlling the temperature.

In an eighteenth aspect of the present disclosure, for example, in the refrigeration cycle system according to the sixteenth or seventeenth aspect, the release path may be connected with the evaporator or the condenser, and the refrigeration cycle system may further include a pump provided on the release path. In such a configuration, the liquid phase refrigerant may certainly be released to the evaporator by work of the pump, regardless of the positional relationship between the evaporator and the gas-liquid separation tank. Similarly, the liquid phase refrigerant may certainly be released to the condenser by work of the pump, regardless of the positional relationship between the condenser and the gas-liquid separation tank.

In a nineteenth aspect of the present disclosure, for example, in the refrigeration cycle system according to any one of the sixteenth to eighteenth aspects, given that a height from an installation surface of the refrigeration cycle system to a bottom of the gas-liquid separation tank is set as h1 and a height from the installation surface to the liquid surface of the liquid phase refrigerant in the evaporator in a case where the refrigeration cycle system is stopped is set as h2, h1 ≥ h2 may be satisfied. In such a configuration, it is possible to completely release the liquid phase refrigerant from the gas-liquid separation tank without using help of a pump. It is also possible to omit a dedicated release path.

Embodiments of the present disclosure will hereinafter be described with reference to drawings. Note that the present disclosure is not limited by the embodiments.

### (First Embodiment)

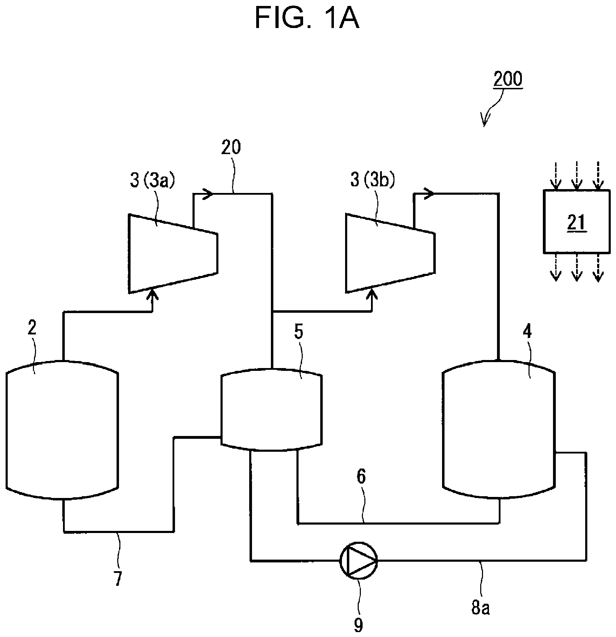

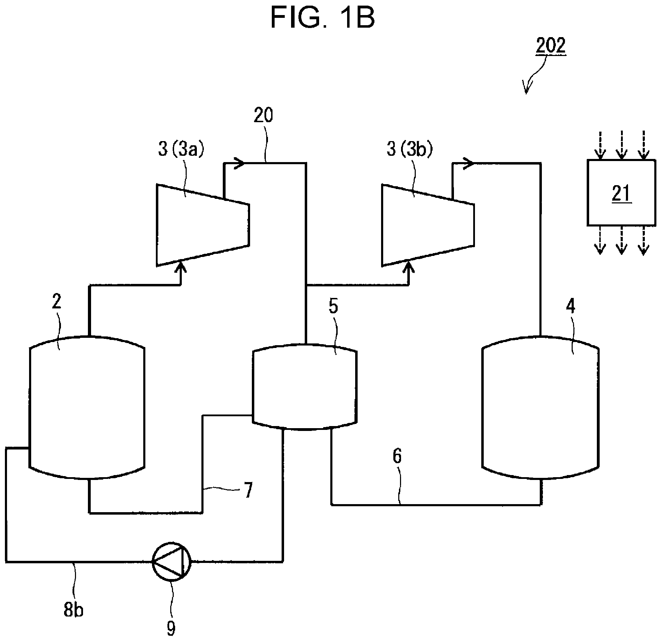

Fig. 1A illustrates a configuration of a refrigeration cycle system 200 according to a first embodiment of the present disclosure. Fig. 1B illustrates a configuration of a refrigeration cycle system 202 according to a first modification example.

In Fig. 1A, the refrigeration cycle system 200 includes an evaporator 2, plural compressors 3, a condenser 4, a gas-liquid separation tank 5, a first circulation path 6, a second circulation path 7, a release path 8a, and a pump 9.

The refrigeration cycle system 200 is filled with a single refrigerant. As the refrigerant that fills the refrigeration cycle system 200, Freon-based refrigerants such as hydrochlorofluorocarbon (HCFC) and hydrofluorocarbon (HFC), refrigerants with low global warming potentials such as HFO-1234yf, and natural refrigerants such as CO₂ and water may be used. In a case where a low-pressure refrigerant such as water is used, the compressor is susceptible to surging because the pressure ratio in a cycle becomes high, and the region thus becomes large in which activation characteristics are improved by the present disclosure.

The refrigeration cycle system 200 may be filled with a refrigerant that includes a substance whose saturated vapor pressure at ordinary temperature is a negative pressure as a main component. As such a refrigerant, a refrigerant that includes water, alcohol, or ether as a main component may be raised. "Main component" means a component that is included most by mass ratio. "Negative pressure" means a lower pressure than the atmospheric pressure as an absolute value. "Ordinary temperature" means a temperature within the range of 20°C ±15°C based on Japanese Industrial Standards (JIS Z8703).

The evaporator 2 is configured with a heat-insulating and pressure-resistant container, for example. The evaporator 2 stores a liquid phase refrigerant, absorbs heat provided from the outside, and thereby evaporates the refrigerant on the inside. The temperature of the liquid phase refrigerant stored in the evaporator 2 and the temperature of a gas phase refrigerant produced by the evaporator 2 are 5°C, for example. Further, the evaporator 2 may be an indirect heat exchanger, in which heat is indirectly exchanged between the liquid phase refrigerant and another heating medium, such as a shell-tube heat exchanger or may be a direct contact heat exchanger such as a spray type or a filler type.

The plural compressors 3 include at least two impellers, draw in the gas phase refrigerant produced by the evaporator 2, and compress that. In a flow direction of the gas phase refrigerant, the plural compressors 3 include a first compressor 3a of a front stage and a second compressor 3b of a rear stage. A compressor route 20 that connects a discharge port of the first compressor 3a and an inlet port of the second compressor 3b together is arranged between the first compressor 3a of the front stage and the second compressor 3b of the rear stage.

The plural compressors 3 are dynamic compressors, for example, which compress and discharge the refrigerant by at least two impellers. In this embodiment, the refrigerant is compressed by a multi-stage impeller. A configuration of the multi-stage impeller may be realized by connecting plural dynamic compressors in series or may be realized by a multi-stage compressor that includes a return channel. That is, each of the first compressor 3a and the second compressor 3b may have at least one impeller. The first compressor 3a and the second compressor 3b may have a common rotational shaft. Raising a centrifugal compressor as an example, an impeller mounted at one end of the rotational shaft may function as the first compressor 3a, and an impeller mounted at the other end of the rotational shaft may function as the second compressor 3b. A dynamic compressor is a compressor that provides a momentum to the gas phase refrigerant, thereafter decelerates the gas phase refrigerant, and thereby raises the pressure of the gas phase refrigerant. As dynamic compressors (turbo compressors), a centrifugal compressor, a mixed flow compressor, an axial flow compressor, and so forth may be raised. The plural compressors 3 may include a mechanism for changing the rotational speed such as a motor driven by an inverter. The temperature of the refrigerant at a discharge port of the second compressor 3b is 100°C to 150°C, for example.

The condenser 4 is configured with a heat-insulating and pressure-resistant container, for example. The condenser 4 stores the liquid phase refrigerant, emits heat to the outside, and thereby condenses the gas phase refrigerant on the inside. The temperature of the gas phase refrigerant introduced into the condenser 4 is 100°C to 150°C, for example. The temperature of the liquid phase refrigerant condensed by the condenser 4 is 35°C, for example. Further, the condenser 4 may be an indirect heat exchanger, in which heat is indirectly exchanged between the refrigerant and another heating medium, such as a shell-tube heat exchanger or may be a direct contact heat exchanger such as a spray type or a filler type.

The gas-liquid separation tank 5 is configured with a heat-insulating and pressure-resistant container, for example. The liquid phase refrigerant is stored in a lower portion of the gas-liquid separation tank 5. The gas-liquid separation tank 5 separates a two-phase refrigerant supplied from the condenser 4 to the gas phase refrigerant and the liquid phase refrigerant. The gas-liquid separation tank 5 supplies the separated liquid phase refrigerant to the second circulation path 7 from a position equivalent to or lower than the liquid surface of the stored liquid phase refrigerant in a gravity direction. The gas-liquid separation tank 5 supplies the separated gas phase refrigerant to the compressor route 20 from a position above the liquid surface of the stored liquid phase refrigerant in the gravity direction. The gas-liquid separation tank 5 functions as an economizer that improves the coefficient of performance (COP) of the refrigeration cycle system 200. "Gravity direction" means directions in parallel with gravity.

In a route through which the gas phase refrigerant is supplied from the gas-liquid separation tank 5 to the second compressor 3b, a demister may be arranged which inhibits mist of the liquid phase refrigerant from accompanying the gas phase refrigerant.

The first circulation path 6 is configured with heat-insulating and pressure-resistant piping, for example. The first circulation path 6 connects the condenser 4 with the gas-liquid separation tank 5. The first circulation path 6 is a refrigerant flow path that leads the liquid phase refrigerant in the condenser 4 to the gas-liquid separation tank 5 and is a refrigerant flow path that causes the liquid phase refrigerant in the condenser 4 to undergo flash expansion. In the first circulation path 6, an expansion valve that causes the liquid phase refrigerant to undergo flash expansion or a flow control valve may be arranged.

The second circulation path 7 is configured with heat-insulating and pressure-resistant piping, for example. The second circulation path 7 connects the gas-liquid separation tank 5 with the evaporator 2. The second circulation path 7 is a refrigerant flow path that leads the refrigerant from the gas-liquid separation tank 5 to the evaporator 2.

The release path 8a is configured with heat-insulating and pressure-resistant piping, for example. The release path 8a connects the gas-liquid separation tank 5 with the condenser 4 and is used to release the liquid phase refrigerant in the gas-liquid separation tank 5 to the condenser 4. In a case where the portion to which the release path 8a is connected is the condenser 4, a tank for reserving the liquid phase refrigerant of the gas-liquid separation tank 5 does not have to be separately provided.

As illustrated in Fig. 1B, the refrigeration cycle system 202 includes a release path 8b instead of the release path 8a. The release path 8b is configured with heat-insulating and pressure-resistant piping, for example. In the refrigeration cycle system 202, the release path 8b connects the gas-liquid separation tank 5 with the evaporator 2 and is used to release the liquid phase refrigerant in the gas-liquid separation tank 5 to the evaporator 2. In a case where the portion to which the release path 8a is connected is the condenser 4, a tank for reserving the liquid phase refrigerant of the gas-liquid separation tank 5 does not have to be separately provided.

The release path 8a is a flow path that is not used in a usual operation of the refrigeration cycle system 200. In the usual operation of the refrigeration cycle system 200, the refrigerant moves from the condenser 4 to the evaporator 2 via the first circulation path 6 and the second circulation path 7. The release path 8a is a separate route from the first circulation path 6 and the second circulation path 7. In such a configuration, less restriction is imposed on the first circulation path 6 and the second circulation path 7, and the first circulation path 6 and the second circulation path 7 may be configured in optimal design in consideration of the efficiency in the usual operation. The same applies to the release path 8b.

The release path 8a illustrated in Fig. 1A is more advantageous than the release path 8b illustrated in Fig. 1B. The liquid phase refrigerant of the gas-liquid separation tank 5 is released to the condenser 4, and a temperature rise of the liquid phase refrigerant in the evaporator 2 may thereby be avoided. As a result, the temperature of the liquid phase refrigerant in the evaporator 2 may quickly be lowered, and motive power of the plural compressors 3 may also be saved.

The release paths 8a and 8b are not limited to the above configurations as long as those are spaces that release the liquid phase refrigerant in the gas-liquid separation tank 5 to the condenser 4 or the evaporator 2. It is possible that the release path 8a and the release path 8b coexist.

The pump 9 is arranged in the release path 8a or 8b. The pump 9 releases the liquid phase refrigerant in the gas-liquid separation tank 5 to the condenser 4 or the evaporator 2 via the release path 8a or 8b. The pump 9 is a velocity pump, for example. A velocity pump is a pump that provides a momentum to the liquid phase refrigerant, thereafter decelerates the liquid phase refrigerant, and thereby raises the pressure of the liquid phase refrigerant. As velocity pumps (turbo pumps), a centrifugal pump, a mixed flow pump, an axial flow pump, and so forth may be raised. The pump 9 may include a mechanism for changing the rotational speed such as a motor driven by an inverter.

The liquid phase refrigerant may certainly be released to the evaporator 2 by work of the pump 9, regardless of the positional relationship between the evaporator 2 and the gas-liquid separation tank 5. Similarly, the liquid phase refrigerant may certainly be released to the condenser 4 by work of the pump 9, regardless of the positional relationship between the condenser 4 and the gas-liquid separation tank 5.

The refrigeration cycle system 200 further includes a control circuit 21 that controls drive of the first compressor 3a, the second compressor 3b, and the pump 9. The control circuit 21 may be a digital signal processor (DSP) that includes an A/D conversion circuit, an input-output circuit, an arithmetic circuit, a storage device, and so forth. The control circuit 21 stores a program for appropriately operating the refrigeration cycle system 200.

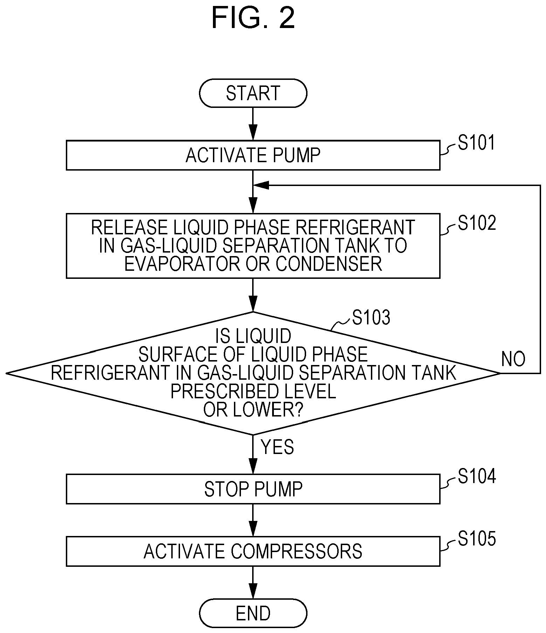

A description will be made about an operation of the refrigeration cycle system 200 configured as described above by using Fig. 2. The flowchart of Fig. 2 illustrates a process executed for activating the refrigeration cycle system 200. Fig. 2 specifically illustrates a process executed by the control circuit 21.

In a case where the refrigeration cycle system 200 is left unattended for a certain period (for example, nighttime), the internal temperature of the refrigeration cycle system 200 is almost balanced with the ambient temperature, and the internal pressure of the refrigeration cycle system 200 is balanced with a specific pressure. For example, when the ambient temperature is 30°C, the internal temperature of the refrigeration cycle system 200 is balanced at 30°C.

First, the pump 9 is activated (step S101). The pump 9 is activated, and the liquid phase refrigerant in the gas-liquid separation tank 5 is thereby released to the condenser 4 or the evaporator 2 via the release path 8a or 8b (step S102).

Next, while the liquid phase refrigerant is released by the pump 9, a determination is made whether or not the liquid surface of the liquid phase refrigerant in the gas-liquid separation tank 5 is at a prescribed level or lower (step S103). That is, in this embodiment, the refrigerant is released until the liquid surface of the liquid phase refrigerant in the gas-liquid separation tank 5 becomes a prescribed level or lower. The prescribed level may be a level in a state where little liquid phase refrigerant is present. That is, the prescribed level may be a height of 0 mm from a bottom surface of the gas-liquid separation tank 5. Step S103 may be a step for determining whether or not the gas-liquid separation tank 5 is empty.

The refrigeration cycle system 200 may include a level sensor for checking the position of the liquid surface of the liquid phase refrigerant in the gas-liquid separation tank 5. The level sensor may be provided on the inside of the gas-liquid separation tank 5 or may be provided on the outside of the gas-liquid separation tank 5. As level sensors, a float level sensor, an ultrasonic level sensor, a capacitive level sensor, laser level sensor, and so forth may be raised.

In addition, when prescribed time elapses from time immediately after activation of the pump 9, a determination may be made that the liquid surface of the liquid phase refrigerant is at the prescribed level or lower. "Prescribed time" may be sufficient time that is defined by performing in advance experimental investigation.

In a case where the liquid surface of the liquid phase refrigerant becomes the prescribed level or lower, the pump 9 is stopped (step S104).

The first compressor 3a and the second compressor 3b are activated (step S105).

The timing to activate the first compressor 3a and the second compressor 3b is determined in accordance with the level of the liquid surface of the liquid phase refrigerant in the gas-liquid separation tank 5, and surging may thereby certainly be prevented.

The pump 9 is stopped, supply of the liquid phase refrigerant from the gas-liquid separation tank 5 to the condenser 4 or the evaporator 2 is thereby stopped, and the first compressor 3a and the second compressor 3b are activated. Specifically, after supply of the liquid phase refrigerant from the gas-liquid separation tank 5 to the condenser 4 or the evaporator 2 is stopped, the first compressor 3a and the second compressor 3b are activated. In such a manner, surging may certainly be prevented.

However, the first compressor 3a and the second compressor 3b may be activated immediately before the pump 9 is stopped. That is, it is not necessary to execute a process of step S104 and a process of step S105 in this order. For example, the first compressor 3a and the second compressor 3b may be activated while the rotational speed of the pump 9 is lowering. Even if the first compressor 3a and the second compressor 3b are activated before the pump 9 is completely stopped, surging does not necessarily occur right away. In this case, even if the timing of stop of the pump 9 is later than the timing of activation of the first compressor 3a and the second compressor 3b, surging may be prevented.

When the first compressor 3a and the second compressor 3b are activated, the pressure in the evaporator 2 gradually lowers. The refrigerant absorbs the heat of outside air, and the gas phase refrigerant is thereby produced in the evaporator 2.

The gas phase refrigerant produced in the evaporator 2 is drawn into the first compressor 3a, compressed by the first compressor 3a and the second compressor 3b, and discharged from the second compressor 3b. The gas phase refrigerant at a high pressure discharged from the second compressor 3b is introduced into the condenser 4, emits heat to the outside air, and is thereby condensed to become the liquid phase refrigerant. The liquid phase refrigerant stored in the condenser 4 is supplied to the gas-liquid separation tank 5 via the first circulation path 6 while undergoing flash expansion. The refrigerant is separated to the gas phase refrigerant and the liquid phase refrigerant in the gas-liquid separation tank 5. The gas phase refrigerant is supplied from the gas-liquid separation tank 5 to spaces among the multi-stage impellers of the plural compressors 3. In this embodiment, the gas phase refrigerant is supplied from the gas-liquid separation tank 5 to the compressor route 20 and drawn into the second compressor 3b. The liquid phase refrigerant is supplied from the gas-liquid separation tank 5 to the evaporator 2 via the second circulation path 7 while undergoing flash expansion.

As described above, in this embodiment, after the liquid phase refrigerant stored in the gas-liquid separation tank 5 is released to the outside of the gas-liquid separation tank 5, the first compressor 3a and the second compressor 3b are activated. That is, the refrigeration cycle system 200 is activated. In such a manner, the pressure in the gas-liquid separation tank 5 is determined by the pressure of the condenser 4 and the pressure of the evaporator 2. Thus, the pressure ratios of the first compressor 3a and the second compressor 3b become pressure ratios that are equivalent to each other.

The "pressure ratios" include a low-pressure stage pressure ratio (intermediate pressure/pressure in the evaporator) and a high-pressure stage pressure ratio (pressure in the condenser/intermediate pressure). The low-pressure stage pressure ratio is a pressure ratio in the first compressor 3a. The high-pressure stage pressure ratio is a pressure ratio in the second compressor 3b.

The low-pressure stage pressure ratio (intermediate pressure/pressure in the evaporator) is prevented from largely exceeding the low-pressure stage pressure ratio in the usual operation, and it thereby becomes possible to activate the refrigeration cycle system 200 even from a state at a high temperature without occurrence of surging. The intermediate pressure is a pressure of the compressor route 20 and is a pressure of the gas phase refrigerant that is present on the inside of the gas-liquid separation tank 5.

Then, after completion of activation, the liquid phase refrigerant of the condenser 4 is supplied to the gas-liquid separation tank 5 and caused to undergo flash expansion. In other words, after the first compressor 3a and the second compressor 3b are activated, the liquid surface of the liquid phase refrigerant in the gas-liquid separation tank 5 is raised. Accordingly, it becomes possible to create a two-phase state at a prescribed intermediate pressure without controlling the temperature. Further, it becomes possible to expand the liquid phase refrigerant that circulates from the condenser 4 to the evaporator 2 in two stages that include a stage from the condenser 4 to the gas-liquid separation tank 5 and a stage from the gas-liquid separation tank 5 to the evaporator 2. As a result, the COP may be improved in a steady operation.

In this specification, "activate" means increasing the rotational speed of the compressor from 0 rpm to a prescribed rotational speed. For example, when an operation of the compressor starts and the rotational speed is in a process of increase, the compressor is being activated. When the rotational speed reaches a prescribed rotational speed, it is determined that activation of the compressor is completed. "Activate the refrigeration cycle system" means activation of the compressor. "Prescribed rotational speed" may be a rotational speed that is determined by the control circuit 21 in order to obtain desired refrigeration capacity.

In this specification, "stop" means a state where the rotational speed of the pump or the compressor is zero.

In this embodiment, the number of compressors 3 is not particularly limited. The number of compressors 3 may be three or more.

In the following, some other embodiments will be described. The same reference characters are provided to elements common among the first embodiment and the other embodiments, and descriptions thereof may not be made. Descriptions about the embodiments may be applied to each other unless a technical contradiction occurs. Unless a technical contradiction occurs, the embodiments may be combined with each other.

### (Second Embodiment)

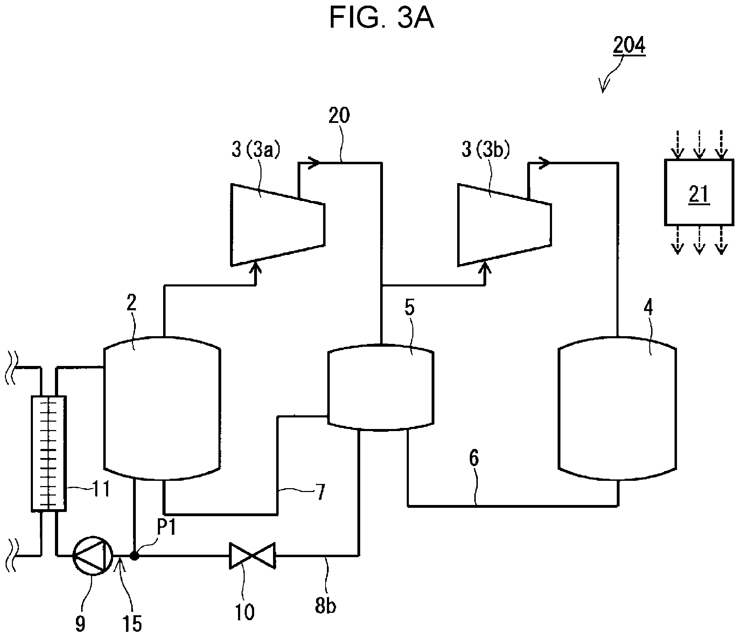

Fig. 3A illustrates a configuration of a refrigeration cycle system 204 according to a second embodiment.

As illustrated in Fig. 3A, the refrigeration cycle system 204 includes a shutoff valve 10 and a heat absorption heat exchanger 11 in addition to the configuration of the refrigeration cycle system 202.

The pump 9 is arranged on a route that connects the gas-liquid separation tank 5 with the heat absorption heat exchanger 11. Specifically, the refrigeration cycle system 204 further includes a heat absorption route 15. The heat absorption route 15 is a looped circulation path that causes the refrigerant to circulate between the evaporator 2 and the heat absorption heat exchanger 11. In this embodiment, the release path 8b is connected with the heat absorption route 15 at a merging point P1. In the heat absorption route 15, the pump 9 is arranged between the merging point P1 and an entrance of the heat absorption heat exchanger 11.

The shutoff valve 10 is a flow path shutoff valve such as a ball valve, for example, and is arranged in the release path 8b connected with the gas-liquid separation tank 5 and an inlet port of the pump 9. Specifically, in the release path 8b, the shutoff valve 10 is arranged between the gas-liquid separation tank 5 and the merging point P1. The shutoff valve 10 is opened while the pump 9 is caused to operate, and the liquid phase refrigerant stored in the gas-liquid separation tank 5 is thereby released into the evaporator 2. The shutoff valve 10 is closed, and release of the liquid phase refrigerant via the release path 8b is thereby stopped.

The heat absorption heat exchanger 11 is a plate heat exchanger, for example, and is arranged on the heat absorption route 15. The heat absorption heat exchanger 11 is configured to exchange heat between a low temperature heating medium for air conditioning and the liquid phase refrigerant in the evaporator 2, for example, and cools the low temperature heating medium for air conditioning by the liquid phase refrigerant at a low temperature produced in the evaporator 2.

The control circuit 21 that controls drive of the shutoff valve 10, the plural compressors 3, and the pump 9 is provided to the refrigeration cycle system 204.

As for the refrigeration cycle system 204 configured as described above, a process executed by the control circuit 21 is as described with reference to Fig. 2 except addition of control of the shutoff valve 10.

First, the pump 9 is activated in a state where the shutoff valve 10 is closed. As a result, the liquid phase refrigerant in the evaporator 2 circulates between the heat absorption heat exchanger 11 and the evaporator 2.

The shutoff valve 10 is thereafter opened. As a result, the liquid phase refrigerant in the gas-liquid separation tank 5 is drawn into the pump 9 and thereby released to the evaporator 2 via the release path 8b and the heat absorption heat exchanger 11.

Subsequently, in a case where the level of the liquid surface of the liquid phase refrigerant in the gas-liquid separation tank 5 becomes approximately 0 mm, the shutoff valve 10 is closed, and the first compressor 3a and the second compressor 3b are activated. As a result, the pressure in the evaporator 2 lowers, heat is absorbed from the outside air, and the gas phase refrigerant is thereby produced.

The gas phase refrigerant produced in the evaporator 2 is drawn into the first compressor 3a, compressed in the first compressor 3a and the second compressor 3b, and discharged from the second compressor 3b.

The gas phase refrigerant at a high pressure discharged from the second compressor 3b is introduced into the condenser 4, emits heat to the outside air, and is thereby condensed to become the liquid phase refrigerant. The liquid phase refrigerant stored in the condenser 4 is supplied to the gas-liquid separation tank 5 via the first circulation path 6 while undergoing flash expansion. The refrigerant is separated to the gas phase refrigerant and the liquid phase refrigerant in the gas-liquid separation tank 5. The gas phase refrigerant is supplied from the gas-liquid separation tank 5 to spaces among the multi-stage impellers of the plural compressors 3. In this embodiment, the gas phase refrigerant is supplied from the gas-liquid separation tank 5 to the compressor route 20 and drawn into the second compressor 3b. The liquid phase refrigerant is supplied from the gas-liquid separation tank 5 to the evaporator 2 via the second circulation path 7 while undergoing flash expansion.

After completion of activation, the liquid phase refrigerant of the condenser 4 is supplied to the gas-liquid separation tank 5 and caused to undergo flash expansion. In other words, after the first compressor 3a and the second compressor 3b are activated, the liquid surface of the liquid phase refrigerant in the gas-liquid separation tank 5 is raised. Accordingly, it becomes possible to create a two-phase state at a prescribed intermediate pressure without controlling the temperature. Further, it becomes possible to expand the liquid phase refrigerant that circulates from the condenser 4 to the evaporator 2 in two stages that include a stage from the condenser 4 to the gas-liquid separation tank 5 and a stage from the gas-liquid separation tank 5 to the evaporator 2. As a result, the COP may be improved in a steady operation.

For the same reason as the reason described in the first embodiment, in this embodiment also, the refrigeration cycle system 202 may be activated without occurrence of surging.

In this embodiment, the pump 9 for releasing the liquid phase refrigerant from the gas-liquid separation tank 5 is also used as a pump for causing the liquid phase refrigerant to circulate between the evaporator 2 and the heat absorption heat exchanger 11. Such a configuration enables reduction in the number of requested pumps.

### (Second Modification Example)

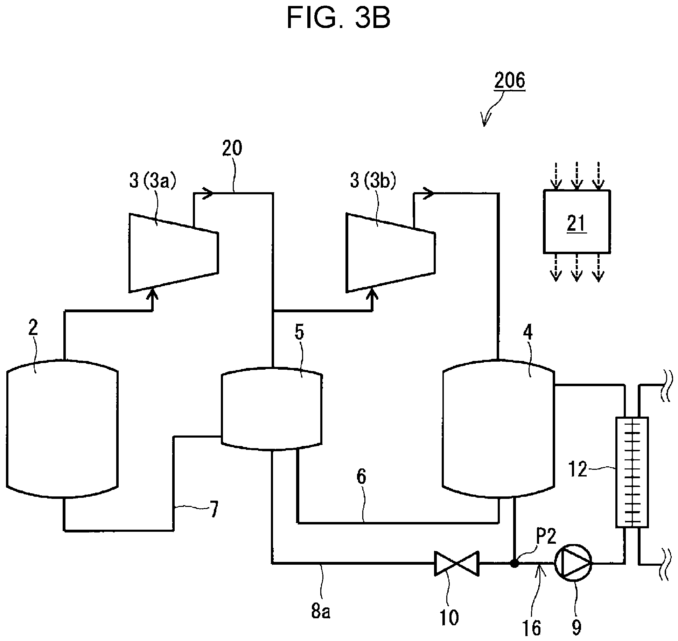

Fig. 3B illustrates a configuration of a refrigeration cycle system 206 according to a second modification example.

As illustrated in Fig. 3B, the refrigeration cycle system 206 includes the shutoff valve 10 and a heat dissipation heat exchanger 12 in addition to the configuration of the refrigeration cycle system 200.

The pump 9 is arranged on a route that connects the gas-liquid separation tank 5 with the heat dissipation heat exchanger 12. Specifically, the refrigeration cycle system 206 further includes a heat dissipation route 16. The heat dissipation route 16 is a looped circulation path that causes the refrigerant to circulate between the condenser 4 and the heat dissipation heat exchanger 12. In this modification example, the release path 8a is connected with the heat dissipation route 16 at a merging point P2. In the heat dissipation route 16, the pump 9 is arranged between the merging point P2 and an entrance of the heat dissipation heat exchanger 12.

The shutoff valve 10 is a flow path shutoff valve such as a ball valve, for example, and is arranged in the release path 8a connected with the gas-liquid separation tank 5 and the inlet port of the pump 9. Specifically, in the release path 8a, the shutoff valve 10 is arranged between the gas-liquid separation tank 5 and the merging point P2. The shutoff valve 10 is opened while the pump 9 is caused to operate, and the liquid phase refrigerant stored in the gas-liquid separation tank 5 is thereby released into the condenser 4. The shutoff valve 10 is closed, and release of the liquid phase refrigerant via the release path 8a is thereby stopped.

The heat dissipation heat exchanger 12 is a plate heat exchanger, for example, and is arranged on the heat dissipation route 16. The heat dissipation heat exchanger 12 is configured such that heat is exchanged between a heating medium for emitting the heat extracted by a refrigeration cycle to the atmosphere and the liquid phase refrigerant in the condenser 4, for example, and heats the heating medium by the liquid phase refrigerant at a high temperature produced in the condenser 4.

The condenser 4 is a direct condenser that uses a filler or spray, for example.

As for the refrigeration cycle system 206 configured as described above, a process executed by the control circuit 21 is as described with reference to Fig. 2 except addition of control of the shutoff valve 10.

First, the pump 9 is activated in a state where the shutoff valve 10 is closed. As a result, the liquid phase refrigerant in the condenser 4 circulates between the heat dissipation heat exchanger 12 and the condenser 4.

The shutoff valve 10 is thereafter opened. As a result, the liquid phase refrigerant in the gas-liquid separation tank 5 is drawn into the pump 9 and thereby released to the condenser 4 via the release path 8a and the heat dissipation heat exchanger 12.

The shutoff valve 10 is thereafter closed, and the first compressor 3a and the second compressor 3b are activated. As a result, the pressure in the evaporator 2 lowers, heat is absorbed from the outside air, and the gas phase refrigerant is thereby produced.

The gas phase refrigerant produced in the evaporator 2 is drawn into the first compressor 3a, compressed in the first compressor 3a and the second compressor 3b, and discharged from the second compressor 3b. The gas phase refrigerant at a high pressure discharged from the second compressor 3b is introduced into the condenser 4, emits heat to the outside air, and is thereby condensed to become the liquid phase refrigerant. The liquid phase refrigerant stored in the condenser 4 is supplied to the gas-liquid separation tank 5 via the first circulation path 6 while undergoing flash expansion. The refrigerant is separated to the gas phase refrigerant and the liquid phase refrigerant in the gas-liquid separation tank 5. The gas phase refrigerant is supplied from the gas-liquid separation tank 5 to spaces among the multi-stage impellers of the plural compressors 3. In this modification example, the gas phase refrigerant is supplied from the gas-liquid separation tank 5 to the compressor route 20 and drawn into the second compressor 3b. The liquid phase refrigerant is supplied from the gas-liquid separation tank 5 to the evaporator 2 via the second circulation path 7 while undergoing flash expansion.

After completion of activation, the liquid phase refrigerant of the condenser 4 is supplied to the gas-liquid separation tank 5 and caused to undergo flash expansion. In other words, after the first compressor 3a and the second compressor 3b are activated, the liquid surface of the liquid phase refrigerant in the gas-liquid separation tank 5 is raised. Accordingly, it becomes possible to create a two-phase state at a prescribed intermediate pressure without controlling the temperature. Further, it becomes possible to expand the liquid phase refrigerant that circulates from the condenser 4 to the evaporator 2 in two stages that include a stage from the condenser 4 to the gas-liquid separation tank 5 and a stage from the gas-liquid separation tank 5 to the evaporator 2. As a result, the COP may be improved in a steady operation.

For the same reason as the reason described in the first embodiment, in this modification example also, the refrigeration cycle system 206 may be activated without occurrence of surging.

In this modification example, the pump 9 for releasing the liquid phase refrigerant from the gas-liquid separation tank 5 is also used as a pump for causing the liquid phase refrigerant to circulate between the condenser 4 and the heat dissipation heat exchanger 12. Such a configuration enables reduction in the number of requested pumps.

### (Third Modification Example)

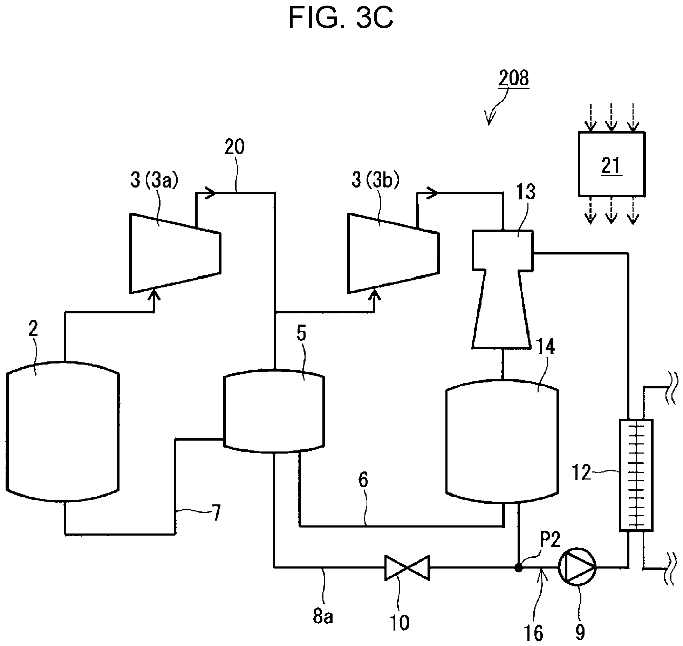

Fig. 3C illustrates a configuration of a refrigeration cycle system 208 according to a third modification example.

As illustrated in Fig. 3C, the refrigeration cycle system 208 includes the shutoff valve 10 and the heat dissipation heat exchanger 12 in addition to the configuration of the refrigeration cycle system 200. In addition, in this modification example, the condenser 4 is replaced by a condensing ejector 13 and a buffer tank 14. That is, this modification example may be obtained by replacing the condenser 4 in the second modification example by the condensing ejector 13 and the buffer tank 14.

The pump 9 is arranged on a route that connects the gas-liquid separation tank 5 with the heat absorption heat exchanger 11. Specifically, the refrigeration cycle system 208 further includes the heat dissipation route 16. The heat dissipation route 16 is a looped circulation path that causes the refrigerant to circulate among the buffer tank 14, the heat dissipation heat exchanger 12, and the condensing ejector 13. In this modification example, the release path 8a is connected with the heat dissipation route 16 at the merging point P2. In the heat dissipation route 16, the pump 9 is arranged between the merging point P2 and the entrance of the heat dissipation heat exchanger 12.

The shutoff valve 10 is a flow path shutoff valve such as a ball valve, for example, and is arranged in the release path 8a connected with the gas-liquid separation tank 5 and the inlet port of the pump 9. Specifically, in the release path 8a, the shutoff valve 10 is arranged between the gas-liquid separation tank 5 and the merging point P2. The shutoff valve 10 is opened while the pump 9 is caused to operate, and the liquid phase refrigerant stored in the gas-liquid separation tank 5 is thereby released into the buffer tank 14. The shutoff valve 10 is closed, and release of the liquid phase refrigerant via the release path 8b is thereby stopped.

The configuration of the heat dissipation heat exchanger 12 is as described earlier.

The condensing ejector 13 is a device that uses the liquid phase refrigerant as a driven flow and the gas phase refrigerant as a suction flow and thereby raises the pressure of the sucked gas phase refrigerant. The condensing ejector 13 is configured with a spray nozzle that atomizes and jets the liquid phase refrigerant, a vapor inflow path that sucks vapor, and a mixing chamber that mixes the atomized liquid phase refrigerant and the sucked gas phase refrigerant and raises the pressure. The spray nozzle is configured with a metal material such as brass. The mixing chamber and the vapor inflow path are configured with metal materials such as stainless steel and iron.

The buffer tank 14 is configured with a heat-insulating and pressure-resistant container, for example. The buffer tank 14 separates the refrigerant discharged from the condensing ejector 13 to the gas phase refrigerant and the liquid phase refrigerant and stores those. The temperature of the stored refrigerants is 35°C, for example.

The control circuit 21 that controls drive of the shutoff valve 10, the plural compressors 3, and the pump 9 is provided to the refrigeration cycle system 208.

As for the refrigeration cycle system 208 configured as described above, a process executed by the control circuit 21 is as described with reference to Fig. 2 except addition of control of the shutoff valve 10.

When the pump 9 is activated in a state where the shutoff valve 10 is closed, the liquid phase refrigerant in the buffer tank 14 circulates between the heat dissipation heat exchanger 12 and the buffer tank 14. The shutoff valve 10 is thereafter opened, and the liquid phase refrigerant in the gas-liquid separation tank 5 is thereby released to the buffer tank 14 via the release path 8a, the heat dissipation heat exchanger 12, and the condensing ejector 13.

When the shutoff valve 10 is thereafter closed and the first compressor 3a and the second compressor 3b are activated, the pressure in the evaporator 2 lowers, heat is absorbed from the outside air, and the gas phase refrigerant is thereby produced. The gas phase refrigerant produced in the evaporator 2 is drawn into the first compressor 3a, compressed in the first compressor 3a and the second compressor 3b, and discharged from the second compressor 3b. The gas phase refrigerant at a high pressure discharged from the second compressor 3b is drawn into the condensing ejector 13. The gas phase refrigerant drawn into the condensing ejector 13 merges with the liquid phase refrigerant supplied to the condensing ejector 13 via the heat dissipation heat exchanger 12 and becomes a two-phase state. The pressure of the refrigerant in the two-phase state rises, and the gas phase refrigerant is thereby condensed. The liquid phase refrigerant is supplied to the buffer tank 14 and stored. The liquid phase refrigerant stored in the buffer tank 14 dissipates heat in the heat dissipation heat exchanger 12 and is again supplied to the condensing ejector 13. Further, a portion of the liquid phase refrigerant in the buffer tank 14 is supplied to the gas-liquid separation tank 5 via the first circulation path 6 while undergoing flash expansion. The gas phase refrigerant that results from separation to gas and liquid in the gas-liquid separation tank 5 is supplied to spaces among the multi-stage impellers of the plural compressors 3.

After completion of activation, the liquid phase refrigerant of the condenser 4 is supplied to the gas-liquid separation tank 5 and caused to undergo flash expansion. In other words, after the first compressor 3a and the second compressor 3b are activated, the liquid surface of the liquid phase refrigerant in the gas-liquid separation tank 5 is raised. Accordingly, it becomes possible to create a two-phase state at a prescribed intermediate pressure without controlling the temperature. Further, it becomes possible to expand the liquid phase refrigerant that circulates from the condenser 4 to the evaporator 2 in two stages that include a stage from the condenser 4 to the gas-liquid separation tank 5 and a stage from the gas-liquid separation tank 5 to the evaporator 2. As a result, the COP may be improved in a steady operation.

In this modification example, the pump 9 for releasing the liquid phase refrigerant from the gas-liquid separation tank 5 is also used as a pump for supplying the liquid phase refrigerant to the condensing ejector 13. Such a configuration enables reduction in the number of requested pumps.

### (Third Embodiment)

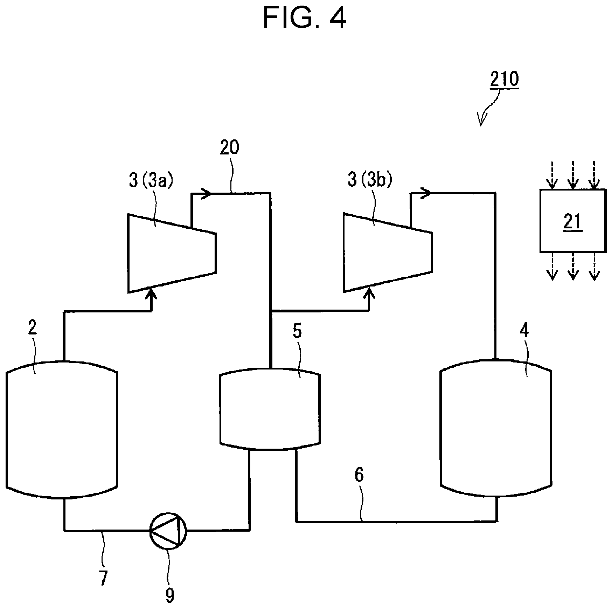

Fig. 4 illustrates a configuration of a refrigeration cycle system 210 according to a third embodiment.

The refrigeration cycle system 210 is different from the embodiments described earlier in that another release path than the first circulation path 6 and the second circulation path 7 is not included. In the refrigeration cycle system 210, the pump 9 for releasing the liquid phase refrigerant from the gas-liquid separation tank 5 is arranged in the second circulation path 7. In other words, in this embodiment, the second circulation path 7 also serves as a release path.

Each process of the flowchart described with reference to Fig. 2 is executed, and the refrigeration cycle system 210 may thereby be activated. However, in this embodiment, instead of step S104 in Fig. 2, a process for adjusting the rotational speed of the pump 9 is executed. Typically, the rotational speed of the pump 9 is lowered. The pump 9 is operated at a requested rotational speed also after the activation of the refrigeration cycle system 210.

As this embodiment, it is possible to release the liquid phase refrigerant from the gas-liquid separation tank 5 without using a dedicated release path.

### (Fourth Embodiment)

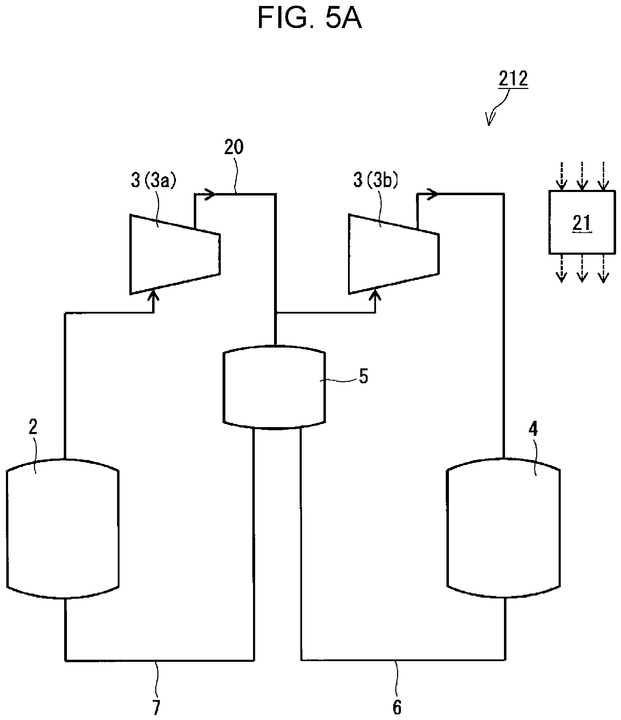

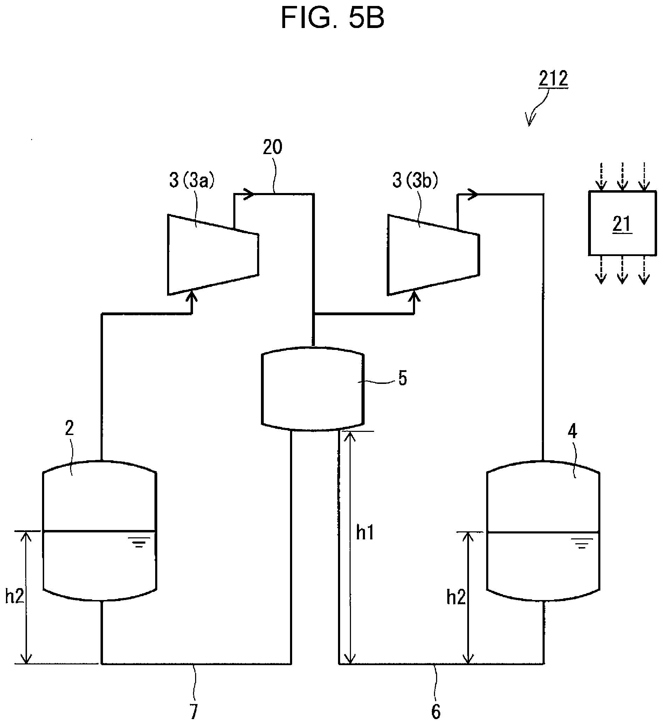

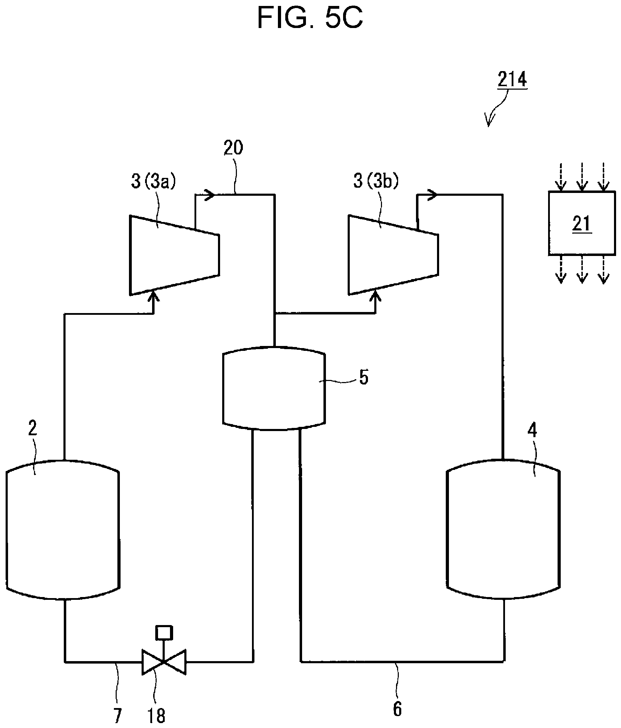

Fig. 5A illustrates a configuration of a refrigeration cycle system 212 according to a fourth embodiment. Fig. 5B illustrates a state where the refrigeration cycle system 212 is stopped. Fig. 5C illustrates a configuration of a refrigeration cycle system 214 according to a fourth modification example.

The refrigeration cycle system 212 is different from the embodiments described earlier in that another release path than the first circulation path 6 and the second circulation path 7 is not included. In this embodiment, the second circulation path 7 also serves as a release path. In addition, the refrigeration cycle system 212 is different from the embodiments described earlier in that a pump for releasing the liquid phase refrigerant from the gas-liquid separation tank 5 is not included. In this embodiment, the positional relationship between the gas-liquid separation tank 5 and the evaporator 2 is defined such that the liquid phase refrigerant is released from the gas-liquid separation tank 5 by gravity in a case where the refrigeration cycle system 212 is stopped.

Specifically, as illustrated in Fig. 5B, given that the height from an installation surface of the refrigeration cycle system 212 to a bottom of the gas-liquid separation tank 5 is set as h1 and the height from the installation surface to the liquid surface of the liquid phase refrigerant in the evaporator 2 in a case where the refrigeration cycle system 212 is stopped is set as h2, h1 ≥ h2 is satisfied. In this embodiment, the whole gas-liquid separation tank 5 is positioned above the evaporator 2. In the gravity direction, the bottom (lower end) of the gas-liquid separation tank 5 is positioned above an upper end of the evaporator 2. "Installation surface" may be a floor surface on which the refrigeration cycle system 212 is actually installed or may be an imaginary horizontal plane that passes through the lowermost point of the evaporator 2 and the second circulation path 7 in the gravity direction. "Bottom (lower end) of the gas-liquid separation tank 5" represents the position of the lowermost point of the gas-liquid separation tank 5 in the gravity direction. "Upper end of the evaporator 2" represents the position of the uppermost point of the evaporator 2 in the gravity direction.

After the refrigeration cycle system 212 stops, the liquid phase refrigerant is gradually released from the gas-liquid separation tank 5 to the evaporator 2 in response to the internal pressure of the refrigeration cycle system 212 being gradually balanced. In the above-described configuration, it is possible to completely release the liquid phase refrigerant from the gas-liquid separation tank 5 without using help of a pump. It is also possible to omit a dedicated release path.

Because the liquid phase refrigerant is not present in the gas-liquid separation tank 5, when the control circuit 21 receives an instruction to activate the refrigeration cycle system 212, the control circuit 21 immediately activates the first compressor 3a and the second compressor 3b. That is, activation time may be shortened.

Further, the positional relationship between the condenser 4 and the gas-liquid separation tank 5 is defined similarly to the positional relationship between the evaporator 2 and the gas-liquid separation tank 5. Given that the height from the installation surface to the liquid surface of the liquid phase refrigerant in the condenser 4 in a case where the refrigeration cycle system 212 is stopped is set as h2, h1 ≥ h2 is satisfied. In other words, the whole gas-liquid separation tank 5 is positioned above the condenser 4. In the gravity direction, the bottom (lower end) of the gas-liquid separation tank 5 is positioned above an upper end of the condenser 4. "Upper end of the condenser 4" represents the position of the uppermost point of the condenser 4 in the gravity direction.

In this embodiment, the second circulation path 7 is designed such that the liquid phase refrigerant is stored in the gas-liquid separation tank 5 in the usual operation. In the second circulation path 7, for example, capillaries that do not request control may be arranged. Accordingly, the liquid phase refrigerant may be stored in the gas-liquid separation tank 5 in the usual operation.

Alternatively, as the refrigeration cycle system 214 illustrated in Fig. 5C, a flow regulation valve 18 whose opening is changeable may be arranged in the second circulation path 7. The flow regulation valve 18 is controlled by the control circuit 21. In a case where the flow regulation valve 18 is arranged in the second circulation path 7, the opening of the flow regulation valve 18 may be adjusted to the maximum opening, for example, when the refrigeration cycle system 212 is stopped. Accordingly, the liquid phase refrigerant may smoothly be released from the gas-liquid separation tank 5 to the evaporator 2.

### (Fifth Modification Example and Sixth Modification Example)

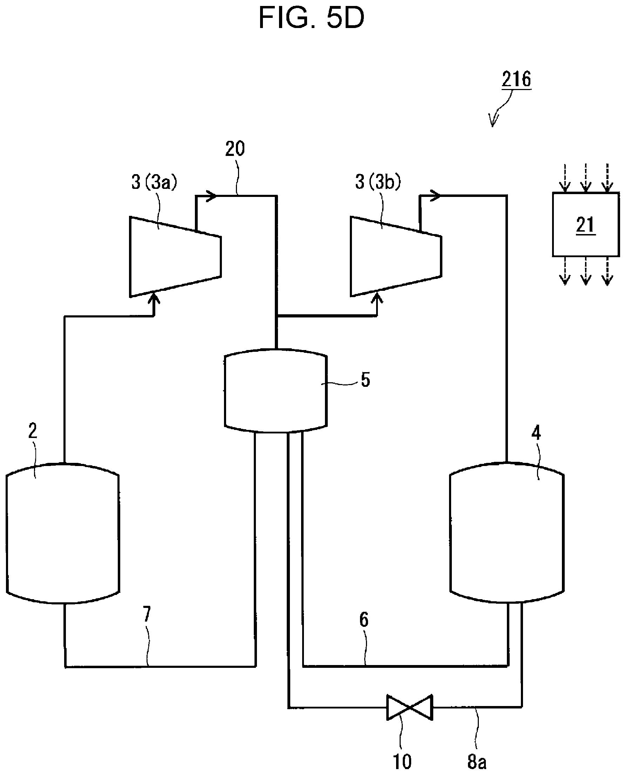

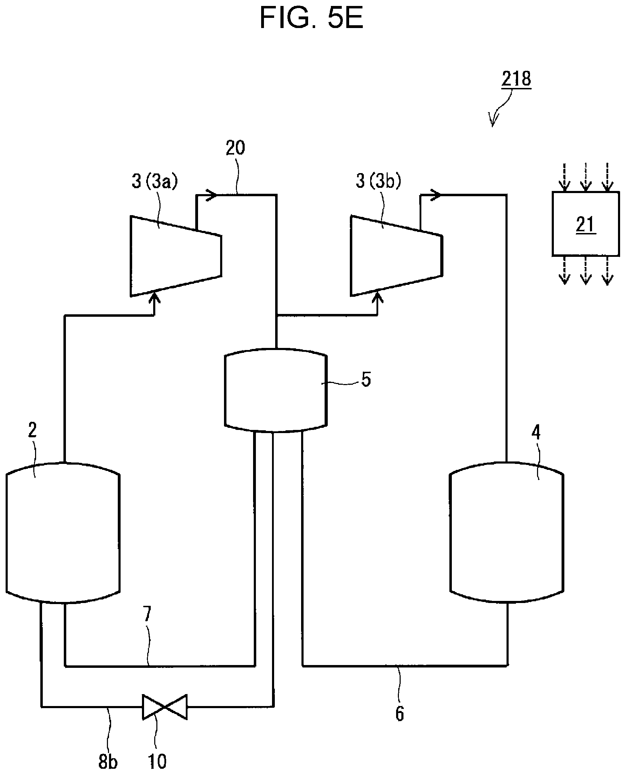

Fig. 5D illustrates a configuration of a refrigeration cycle system 216 according to a fifth modification example. Fig. 5E illustrates a configuration of a refrigeration cycle system 218 according to a sixth modification example.

The refrigeration cycle system 216 illustrated in Fig. 5D includes the release path 8a and the shutoff valve 10 in addition to the configuration of the refrigeration cycle system 212 described with reference to Fig. 5A and Fig. 5B. The configuration of the release path 8a is as described in the first embodiment. The shutoff valve 10 is arranged in the release path 8a. The configuration of the shutoff valve 10 is as described in the second embodiment.

The refrigeration cycle system 218 illustrated in Fig. 5E includes the release path 8b and the shutoff valve 10 in addition to the configuration of the refrigeration cycle system 212 described with reference to Fig. 5A and Fig. 5B. The configuration of the release path 8b is as described in the first embodiment. The shutoff valve 10 is arranged in the release path 8b. The configuration of the shutoff valve 10 is as described in the second embodiment.

The shutoff valve 10 is closed in a usual operation of the refrigeration cycle system 216 or 218. The shutoff valve 10 is opened when the refrigeration cycle system 216 or 218 is stopped. Accordingly, the liquid phase refrigerant may smoothly be released from the gas-liquid separation tank 5 to the condenser 4 or the evaporator 2. The shutoff valve 10 may be opened after the refrigeration cycle system 216 or 218 is stopped. The shutoff valve 10 may be opened immediately before the refrigeration cycle system 216 or 218 is activated. In step S101 of the flowchart described with reference to Fig. 2, the shutoff valve 10 is opened instead of activating the pump. In step S104, the shutoff valve 10 is closed instead of stopping the pump.

For example, in a case where the capillaries, the flow regulation valve, or the like is arranged in the second circulation path 7, comparatively long time is requested in order to empty the gas-liquid separation tank 5 by moving the liquid phase refrigerant from the gas-liquid separation tank 5 to the condenser 4 or the evaporator 2. However, in this modification example, the liquid phase refrigerant may quickly be released from the gas-liquid separation tank 5 to the condenser 4 or the evaporator 2. It is also advantageous that a pump is not necessarily requested.

### (Other Modification Examples)

In the present disclosure, a space to which the liquid phase refrigerant of the gas-liquid separation tank 5 is to be released is not limited to the evaporator 2 or the condenser 4. For example, the gas-liquid separation tank 5 and the plural compressors 3 may be connected together by release paths such that the liquid phase refrigerant of the gas-liquid separation tank 5 is supplied to bearings of the plural compressors 3 when the refrigeration cycle system is activated. Further, a separate spare tank from the evaporator 2 and the condenser 4 may be provided. The gas-liquid separation tank 5 and the spare tank may be connected together by a release path such that the liquid phase refrigerant of the gas-liquid separation tank 5 is temporarily reserved in the spare tank when the refrigeration cycle system is activated. The release path may be a flow path that leads the liquid phase refrigerant stored in the gas-liquid separation tank 5 to the outside of the gas-liquid separation tank 5. Because surging may be prevented as long as the liquid phase refrigerant may be released to the outside of the gas-liquid separation tank 5, the portion to which the liquid phase refrigerant is released in not particularly limited.

### Industrial Applicability

The refrigeration cycle system of the present disclosure may certainly and safely be activated regardless of an initial temperature and an initial pressure in the system. The refrigeration cycle system disclosed in this specification is useful for an air conditioning system, a chiller, a heat storage system, and so forth. The refrigeration cycle system disclosed in this specification is useful particularly for a central air conditioning system of a building, a chiller for process cooling, and so forth.

### Reference Signs List

- 2: evaporator
- 3: compressor
- 3a: first compressor
- 3b: second compressor
- 4: condenser
- 5: gas-liquid separation tank
- 6: first circulation path
- 7: second circulation path
- 8a, 8b: release path
- 9: pump
- 10: shutoff valve
- 11: heat absorption heat exchanger
- 12: heat dissipation heat exchanger
- 13: condensing ejector
- 14: buffer tank
- 15: heat absorption route
- 16: heat dissipation route
- 18: flow regulation valve
- 21: control circuit
- 200, 202, 204, 206, 208, 210, 212, 214, 216, 218: refrigeration cycle system

## Claims

1. A method for driving a refrigeration cycle system,
the refrigeration cycle system including
an evaporator that evaporates a liquid phase refrigerant and produces a gas phase refrigerant,
a first compressor that compresses and discharges the gas phase refrigerant of the evaporator,
a second compressor that compresses and discharges the gas phase refrigerant discharged from the first compressor,
a condenser that condenses the gas phase refrigerant discharged from the second compressor and produces a liquid phase refrigerant, and
a gas-liquid separation tank that stores the liquid phase refrigerant produced by the condenser, produces a gas phase refrigerant by evaporating the liquid phase refrigerant, and supplies the gas phase refrigerant to the second compressor,
each of the first compressor and the second compressor is a dynamic compressor, and
the method comprising:
activating the first compressor and the second compressor after the liquid phase refrigerant stored in the gas-liquid separation tank is released to an outside of the gas-liquid separation tank.

2. The method for driving a refrigeration cycle system according to Claim 1, wherein the refrigeration cycle system
further includes a release path that leads the liquid phase refrigerant stored in the gas-liquid separation tank to the outside of the gas-liquid separation tank, and
releases the liquid phase refrigerant to the outside of the gas-liquid separation tank via the release path.

3. The method for driving a refrigeration cycle system according to Claim 2, wherein
the release path connects the gas-liquid separation tank with the evaporator, and
the liquid phase refrigerant stored in the gas-liquid separation tank flows from the gas-liquid separation tank toward the evaporator.

4. The method for driving a refrigeration cycle system according to Claim 3, wherein supply of the liquid phase refrigerant from the gas-liquid separation tank to the evaporator is stopped and the first compressor and the second compressor are activated.

5. The method for driving a refrigeration cycle system according to Claim 2, wherein
the release path connects the gas-liquid separation tank with the condenser, and
the liquid phase refrigerant stored in the gas-liquid separation tank flows from the gas-liquid separation tank toward the condenser.

6. The method for driving a refrigeration cycle system according to Claim 5, wherein supply of the liquid phase refrigerant from the gas-liquid separation tank to the condenser is stopped and the first compressor and the second compressor are activated.

7. The method for driving a refrigeration cycle system according to any one of Claims 1 to 6, further comprising:
raising a liquid surface of the liquid phase refrigerant in the gas-liquid separation tank after the first compressor and the second compressor are activated.

8. The method for driving a refrigeration cycle system according to any one of Claims 1 to 7, wherein given that a height from an installation surface of the refrigeration cycle system to a bottom of the gas-liquid separation tank is set as h1 and a height from the installation surface to the liquid surface of the liquid phase refrigerant in the evaporator in a case where the refrigeration cycle system is stopped is set as h2, h1 ≥ h2 is satisfied.

9. A refrigeration cycle system comprising:
an evaporator that evaporates a liquid phase refrigerant and produces a gas phase refrigerant;
a first compressor that is a dynamic compressor and compresses and discharges the gas phase refrigerant of the evaporator;
a second compressor that is a dynamic compressor and compresses and discharges the gas phase refrigerant discharged from the first compressor;
a condenser that condenses the gas phase refrigerant discharged from the second compressor and produces a liquid phase refrigerant;
a gas-liquid separation tank that produces a gas phase refrigerant by evaporating the liquid phase refrigerant produced by the condenser and supplies the gas phase refrigerant to the second compressor;
a first circulation path that leads the liquid phase refrigerant in the condenser to the gas-liquid separation tank;
a second circulation path that leads the liquid phase refrigerant in the gas-liquid separation tank to the evaporator; and
a release path that is a separate route from the first circulation path and the second circulation path and leads the liquid phase refrigerant from the gas-liquid separation tank to the evaporator or from the gas-liquid separation tank to the condenser.

10. The refrigeration cycle system according to Claim 9, further comprising:
a pump that is arranged in the release path.

11. The refrigeration cycle system according to Claim 9 or 10, further comprising:
a control circuit that controls drive of the first compressor and the second compressor, wherein
the control circuit causes the liquid phase refrigerant to be released from an inside of the gas-liquid separation tank to the evaporator or the condenser via the release path and activates the first compressor and the second compressor after the liquid phase refrigerant is released.

12. The refrigeration cycle system according to Claim 10, wherein in a case where a liquid surface of the liquid phase refrigerant in the gas-liquid separation tank is at a prescribed level or lower, the pump is stopped, and the first compressor and the second compressor are activated.

13. The refrigeration cycle system according to any one of Claims 9 to 12, wherein the liquid surface of the liquid phase refrigerant in the gas-liquid separation tank is raised after the first compressor and the second compressor are activated.

14. The refrigeration cycle system according to Claim 9, further comprising:
a heat absorption heat exchanger; and
a pump that is arranged on a route which connects the gas-liquid separation tank with the heat absorption heat exchanger.

15. The refrigeration cycle system according to Claim 9, further comprising:
a heat dissipation heat exchanger; and
a pump that is arranged on a route which connects the gas-liquid separation tank with the heat dissipation heat exchanger.

16. A refrigeration cycle system comprising:
an evaporator that evaporates a liquid phase refrigerant and produces a gas phase refrigerant;
a first compressor that compresses and discharges the gas phase refrigerant produced by the evaporator;
a second compressor that compresses and discharges the gas phase refrigerant discharged from the first compressor;
a condenser that condenses the gas phase refrigerant discharged from the second compressor and produces a liquid phase refrigerant;
a gas-liquid separation tank that stores the liquid phase refrigerant produced by the condenser, produces a gas phase refrigerant by evaporating the liquid phase refrigerant, and supplies the gas phase refrigerant to the second compressor;
a release path that is connected with the gas-liquid separation tank and leads the liquid phase refrigerant stored in the gas-liquid separation tank to an outside of the gas-liquid separation tank; and
a control circuit that controls drive of the first compressor and the second compressor, wherein
each of the first compressor and the second compressor is a dynamic compressor, and
the control circuit activates the first compressor and the second compressor after the liquid phase refrigerant stored in the gas-liquid separation tank is released to the outside of the gas-liquid separation tank via the refrigerant release route.

17. The refrigeration cycle system according to Claim 16, wherein the control circuit raises a liquid surface of the liquid phase refrigerant in the gas-liquid separation tank after activating the first compressor and the second compressor.

18. The refrigeration cycle system according to Claim 16 or 17, wherein
the release path is connected with the evaporator or the condenser, and
the refrigeration cycle system further includes a pump provided on the release path.

19. The refrigeration cycle system according to any one of Claims 16 to 18, wherein given that a height from an installation surface of the refrigeration cycle system to a bottom of the gas-liquid separation tank is set as h1 and a height from the installation surface to the liquid surface of the liquid phase refrigerant in the evaporator in a case where the refrigeration cycle system is stopped is set as h2, h1 ≥ h2 is satisfied.
